# EUROPEAN PATENT APPLICATION

(11) **EP 1 155 739 A2**
(43) Date of publication of application: **21.11.2001**
(21) Application number: 01111031.9
(22) Date of filing: 08.05.2001
(51) Int. Cl.: B01J 19/32

(54) **Column packing and method for manufacturing the same**

(30) Priority: 19.05.2000 JP 2000147817
(71) Applicant: Nagaoka, Tadayoshi, Tondabayashi-shi, Osaka-fu (JP); Manteufel, Rolf P.C., 87600 Kaufbeuren (DE)
(72) Inventor: Nagaoka, Tadayoshi, Tondabayashi-shi, Osaka-fu (JP); Manteufel, Rolf P.C., 87600 Kaufbeuren (DE)
(74) Representative: Dallmeyer, Georg, Dipl.-Ing.

(57) **Abstract**

A method for manufacturing a packing made of a three-dimensional net-like structure which constitutes an internal structure of device which performs material transfer, heat exchange or mixing between gases, liquids or gas and liquid, the internal structure being divided in a plurality of chambers or channels connected to one another is provided. The three-dimensional net-like structure is made of a plurality of unit structures (22) which are arranged continuously in vertical and horizontal directions of the three-dimensional net-like structure. Each of the unit structures (22) is formed by converging and dispersion of three or four line elements (23). The method comprises a step of forming a converging section (24) of the unit structure (22) where the three or four line elements (23) converge by binding the three or four line elements (23) together.

## Description

This invention relates to a column packing filled in a device which is divided in a plurality of chambers or channels connected to one another and performs material transfer, heat exchange or mixing between gases, liquids or gas and liquid. The invention relates also to a method for manufacturing such column packing.

Japanese Patent Application Laid-open Publication No. Hei 3-203976 discloses a column packing of this type. This column packing is made up of a plurality of permeable sheets which are disposed in parallel to one another and extend in the direction of a main stream of fluid. Projecting portions of these permeable sheets are disposed in the direction that crosses the main stream of fluid and these projections function as spacers between the adjacent permeable sheets. This packing (hereinafter referred to as "X-packing" because the cross section of a joint portion between two adjacent permeable sheets assumes the shape of the letter X) is beneficial in that fluid flowing down along the permeable sheets is repeatedly joined, mixed, horizontally dispersed and redistributed at each joint of the permeable sheets. Thus, fluid flow which was not uniform when it was charged in the device gradually becomes uniform resulting in an optimum material transfer or heat exchange. Moreover, gas charged in the device passes through the liquid flowing along the inclined surfaces of the permeable sheets and necessary contact between the gas and the liquid is achieved by contacting the gas with the liquid while the gas passes through the permeable sheets, so that material transfer or heat exchange can be effected efficiently with a minimum pressure loss.

For manufacturing this X-packing, the inventor of this application proposed the method described in U.S. Patent No. 5, 673,726. According to this method, as shown in Fig. 24, permeable sheets 51 in plural layers and joints 51b of adjacent permeable sheets 51 are simultaneously produced and a three-dimensional woven packing 50 thereby is produced.

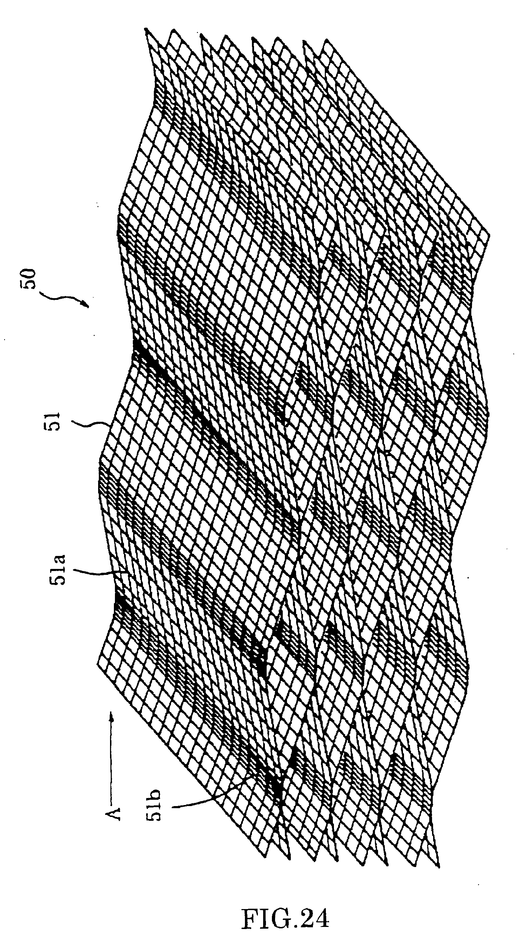

In a case where this X-packing manufactured by the above described prior art method is used as a packing loaded in, e.g., a gas-liquid mixing device, the packing 50 of Fig. 24 is erected in the device and liquid from a distributor is caused to flow from the top to the bottom, i.e., in the direction of arrow A. It is, however, actually difficult to maintain the packing 50 strictly horizontally in the device by reason of an error in installation or other causes and, as a result, the threads that run crosswise of the separated portions 51a and the joints 51b of the packing 50 are disposed in a somewhat inclined relationship to the horizontal direction. For this reason, when the operation of the device is started and liquid is caused to flow in the direction of the arrow A, the liquid flows concentrically along a lower portion of the threads that run crosswise with the result that collection, horizontal distribution and downward redistribution of the liquid are not performed uniformly but flow of the liquid tends to concentrate on the lower portion of the inclined threads running corsswise.

It is, therefore, an object of the invention to provide an X-packing capable of accurately achieving uniform collection and redistribution of liquid at joints of the X-packing.

It is another object of the invention to provide a method for manufacturing such X-packing at a low cost and in a large scale.

For achieving the above described objects of the invention, there is provided a method for manufacturing a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of three line elements, said method comprising a step of forming a converging section of the unit structure where the three line elements converge by binding the three line elements together.

There is also provided a method for manufacturing a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of three line elements, said method comprising steps of:
(A) forming a unit structure with three line elements, said unit structure consisting of a plurality of basic units each of which is a combination of two triangular pyramids having a common bottom surface and apexes disposed in opposite directions, said basic units being arranged continuously in vertical direction of the three-dimensional net-like structure with apexes of each of the basic units being in contact with apexes of adjacent basic units, and a converging section of the three line elements being formed by binding the three line elements at a point of contact of the apexes of the adjacent basic units, and
(B) disposing a plurality of said unit structures in such a manner that adjacent ones of the unit structures come into contact with each other so that the adjacent one of the unit structures are in a position to form the converging section of the three line elements at each apex of the common bottom surface of the two triangular pyramids constituting the basic unit, and forming the converging section of the three line elements by binding the three line elements at each point of contact of the adjacent ones of the unit structures.

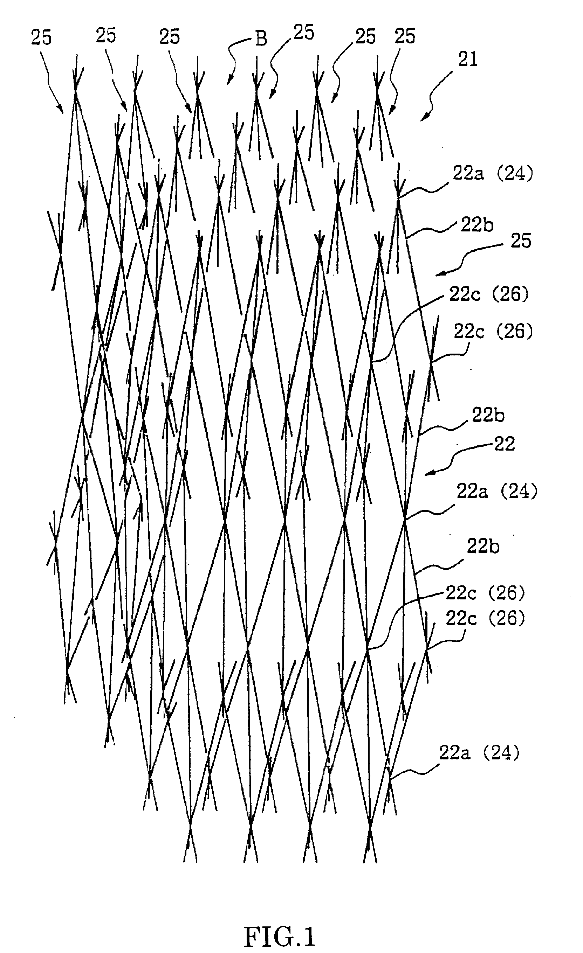

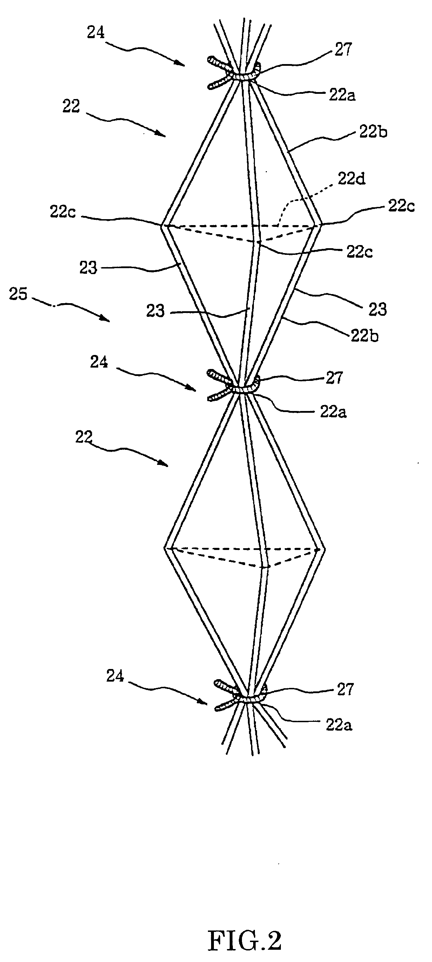

According to the manufacturing method of the invention, a packing 21 consisting of a three-dimensional net-like structure as shown in the schematic perspective view of Fig. 1 can be produced. This packing 21 is made, as shown in the partial perspective view of Fig. 2, of a plurality of basic units 22 which are arranged continuously in vertical direction of the three-dimensional net-like structure with apexes 22a of each basic unit being in contact with the apexes of adjacent basic units 22 to constitute a unit structure 25, each of the basic units 22 being formed by converging and dispersion of three line elements. As shown in Fig. 2, this basic unit 22 is a combination of two triangular pyramids having a common bottom surface 22d and apexes 22a disposed in opposite directions. Three line elements 23 constitute three sides 22b of each triangular pyramid. The apexes 22a of the two triangular pyramids and the sides 22b of the two triangular pyramids are formed by converging and dispersion of the three line elements 23 about a converging section 24 which is formed by binding the thee line elements 23. In the example of Fig. 2, the three line elements 23 are bound by wire 27. Accordingly, no element corresponding to the horizontal threads in the prior art X-packing is used at all in this unit structure 25.

By disposing, as shown in Fig. 1, a plurality of these unit structures 25 in such a manner that horizontally adjacent ones of the unit structures 25 come into contact with each other so that the adjacent one of the unit structures 25 are in a position to form a converging section 26 of the three line elements 23 at each apex 22c of the common bottom surface 22d of the two triangular pyramids constituting the basic unit 22, and forming the converging section 26 of the three line elements 23 by binding the three line elements 23 at each point of contact of the horizontally adjacent ones of the unit structures 25, the packing 21 made of a three-dimensional net-like structure is formed.

Accordingly, by using the packing 21 manufactured by the method of the invention in a device such as a gas-liquid contact device, liquid from a distributor flows in the direction of arrow B in Fig. 1 and, since no element corresponding to the horizontal threads is used in the packing 21, the liquid which has fallen upon the top of the packing 21 does not produce a drift which is caused by flow of the liquid toward a laterally lower portion even if there is an error in installing the packing 21 in the device and, therefore, collection and downward reditribution of the liquid at the apex 22a (i.e., converging section 24) and 22c (converging section 26) of each unit structure 22 are performed uniformly.

The three line elements may be bound by means of wire, clip or the like fastening means or by adhering the three line elements together by means of adhesive.

For achieving the objects of the invention, in one aspect of the invention, there is provided a method for manufacturing a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net like structure being made of a plurality of unit structures which are arranged continuously in vertical and horizontal directions of the three-dimensional net-like structure, each of the unit structures being formed by converging and dispersion of four line elements, said method comprising a step of forming a converging section of the unit structure where the four line elements converge by binding the four line elements together.

There is also provided a method for manufacturing a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of four line elements, said method comprising steps of:
(A) forming a unit structure with four line elements, said unit structure consisting of a plurality of basic units each of which is a combination of two quadruple pyramids having a common bottom surface and apexes disposed in opposite directions, said basic units being arranged continuously in vertical direction of the three-dimensional net-like structure with apexes of each of the basic units being in contact with apexes of adjacent basic units, and a converging section of the four line elements being formed by binding the four line elements at a point of contact of the apexes of the adjacent basic units, and
(B) disposing a plurality of said unit structures in such a manner that adjacent ones of the unit structures come into contact with each other so that the adjacent one of the unit structures are in a position to form the converging section of the four line elements at each apex of the common bottom surface of the two quadruple pyramids constituting the basic unit, and forming the converging section of the four line elements by binding the four line elements at each point of contact of the adjacent ones of the unit structures.

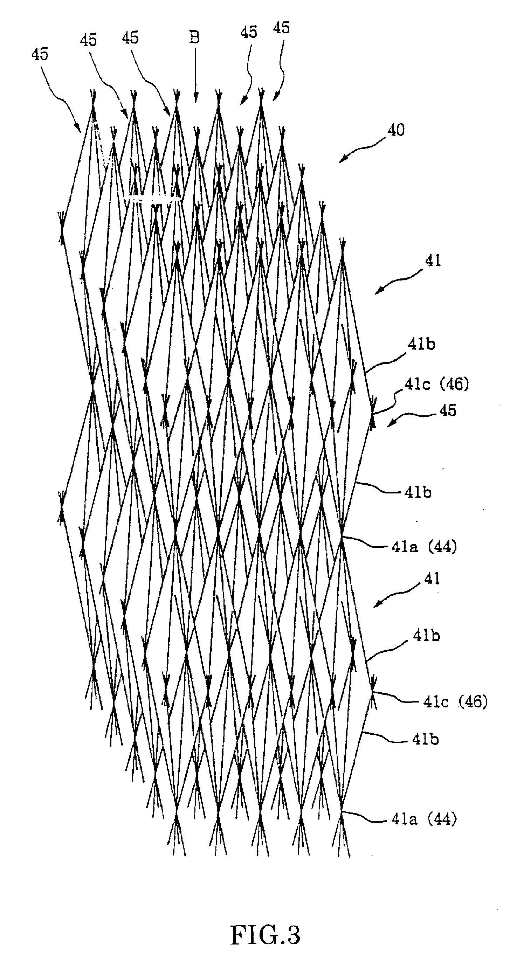

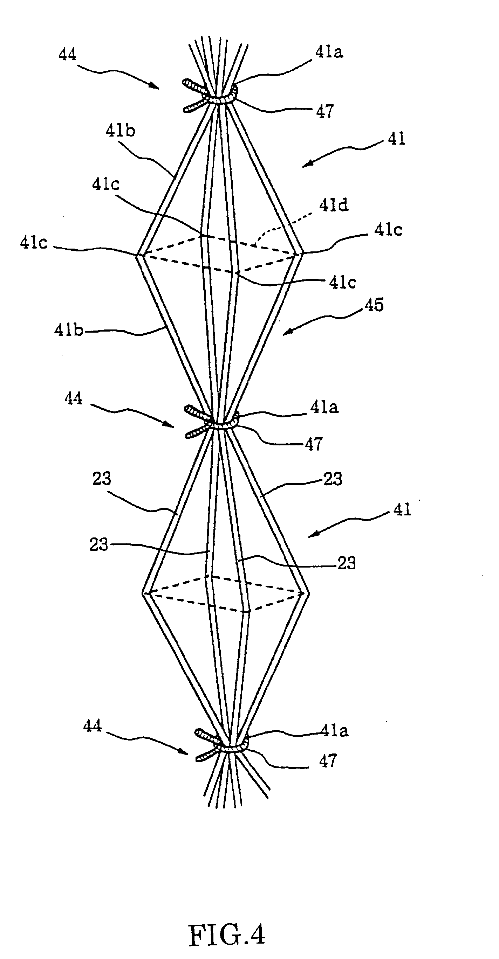

According to the manufacturing method of the invention, a packing 40 consisting of a three-dimensional net-like structure as shown in the schematic perspective view of Fig. 3 can be produced. This packing 40 is made, as shown in the partial perspective view of Fig. 4, of a plurality of basic units 41 which are arranged continuously in vertical direction of the three-dimensional net-like structure with apexes 41a of each basic unit 41 being in contact with the apexes of adjacent basic units 41 to constitute a unit structure 45, each of the basic units 41 being formed by converging and dispersion of four line elements. As shown in Fig. 4, this basic unit 41 is a combination of two quadruple pyramids having a common bottom surface 41d and apexes 41a disposed in opposite directions. Four line elements 23 constitute four sides 41b of each quadruple pyramid. The apexes 41a of the two quadruple pyramids and the sides 41b of the two quadruple pyramids are formed by converging and dispersion of the four line elements 23 about a converging section 44 which is formed by binding the four line elements 23. In the example of Fig. 4, the four line elements 23 are bound by wire 47. Accordingly, no element corresponding to the horizontal threads in the prior art X-packing is used at all in this unit structure 45.

By disposing, as shown in Fig. 3, a plurality of these unit structures 45 in such a manner that horizontally adjacent ones of the unit structures 45 come into contact with each other so that the adjacent one of the unit structures 45 are in a position to form a converging section 46 of the four line elements 23 at each apex 41c of the common bottom surface 41d of the two quadruple pyramids constituting the basic unit 41, and forming the converging section 46 of the four line elements 23 by binding the four line elements 23 at each point of contact of the horizontally adjacent ones of the unit structures 45, the packing 40 made of a three-dimensional net-like structure is formed.

Accordingly, by using the packing 40 manufactured by the method of the invention in a device such as a gas-liquid contact device, liquid from a distributor flows in the direction of arrow B in Fig. 3 and, since no element corresponding to the horizontal threads is used in the packing 40, the liquid which has fallen upon the top of the packing 40 does not produce a drift which is caused by flow of the liquid toward a laterally lower portion even if there is an error in installing the packing 40 in the device and, therefore, collection and downward reditribution of the liquid at the apex 41a (i.e., converging section 44) and 41c (converging section 46) of each unit structure 41 are performed uniformly.

The four line elements may be bound by means of wire, clip or the like fastening means or by adhering the four line elements together by means of adhesive.

The present invention can be applied not only to the column packing used in devices such as a gas-liquid mixing device but also to manufacturing of other three-dimensional net-like structure such as ones used for a mist eliminator, a multi-layer filtering film and aggregate.

In one asepect of the invention, there is provided a method for manufacturing a three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of three line elements, said method comprising a step of forming a converging section of the unit structure where the three line elements converge by binding the three line elements together.

In another aspect of the invention, there is provided a method for manufacturing a three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of three line elements, said method comprising steps of:
(A) forming a unit structure with three line elements, said unit structure consisting of a plurality of basic units each of which is a combination of two triangular pyramids having a common bottom surface and apexes disposed in opposite directions, said basic units being arranged continuously in vertical direction of the three-dimensional net-like structure with apexes of each of the basic units being in contact with apexes of adjacent basic units, and a converging section of the three line elements being formed by binding the three line elements at a point of contact of the apexes of the adjacent basic units, and
(B) disposing a plurality of said unit structures in such a manner that adjacent ones of the unit structures come into contact with each other so that the adjacent one of the unit structures are in a position to form the converging section of the three line elements at each apex of the common bottom surface of the two triangular pyramids constituting the basic unit, and forming the converging section of the three line elements by binding the three line elements at each point of contact of the adjacent ones of the unit structures.

In another aspect of the invention, there is provided a method for manufacturing a three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of four line elements, said method comprising a step of forming a converging section of the unit structure where the four line elements converge by binding the four line elements together.

In another aspect of the invention, there is provided a method for manufacturing a three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of four line elements, said method comprising steps of:
(A) forming a unit structure with four line elements, said unit structure consisting of a plurality of basic units each of which is a combination of two quadruple pyramids having a common bottom surface and apexes disposed in opposite directions, said basic units being arranged continuously in vertical direction of the three-dimensional net-like structure with apexes of each of the basic units being in contact with apexes of adjacent basic units, and a converging section of the four line elements being formed by binding the four line elements at a point of contact of the apexes of the adjacent basic units, and
(B) disposing a plurality of said unit structures in such a manner that adjacent ones of the unit structures come into contact with each other so that the adjacent one of the unit structures are in a position to form the converging section of the four line elements at each apex of the common bottom surface of the two quadruple pyramids constituting the basic unit, and forming the converging section of the four line elements by binding the four line elements at each point of contact of the adjacent ones of the unit structures.

In another aspect of the invention, there is provided a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of three line elements characterized in that a converging section of the unit structure where the three line elements converge is formed by binding the three line elements together.

In another aspect of the invention, there is provided a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of three line elements, said three-dimensional net-like structure being formed of a plurality of unit structures each of which consists of a plurality of basic units each of which is a combination of two triangular pyramids having a common bottom surface and apexes disposed in opposite directions, said basic units being arranged continuously in vertical direction of the three-dimensional net-like structure with apexes of each of the basic units being in contact with apexes of adjacent basic units, said plurality of unit structures being disposed in such a manner that adjacent ones of the unit structures come into contact with each other so that the adjacent one of the unit structures are in a position to form a converging section of the three line elements at each apex of the common bottom surface of the two triangular pyramids constituting the basic unit, a converging section of the three line elements formed at a point of contact of the apexes of the adjacent basic units and the converging section formed at a point of contact of adjacent unit structures being respectively formed by binding the three line elements.

In another aspect of the invention, there is provided a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of four line elements characterized in that a converging section of the unit structure where the four line elements converge is formed by binding the four line elements together.

In another aspect of the invention, there is provided a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of four line elements, said three-dimensional net-like structure being formed of a plurality of unit structures each of which consists of a plurality of basic units each of which is a combination of two quadruple pyramids having a common bottom surface and apexes disposed in opposite directions, said basic units being arranged continuously in vertical direction of the three-dimensional net-like structure with apexes of each of the basic units being in contact with apexes of adjacent basic units, said plurality of unit structures being disposed in such a manner that adjacent ones of the unit structures come into contact with each other so that the adjacent one of the unit structures are in a position to form a converging section of the four line elements at each apex of the common bottom surface of the two quadruple pyramids constituting the basic unit, a converging section of the four line elements formed at a point of contact of the apexes of the adjacent basic units and the converging section formed at a point of contact of adjacent unit structures being respectively formed by binding the four line elements.

In another aspect of the invention, there is provided a three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of three line elements characterized in that a converging section of the unit structure where the three line elements converge is formed by binding the three line elements together.

In another aspect of the invention, there is provided a three-dimensional net-like structure wherein the three-dimensional net-like structure is formed of a plurality of unit structures each of which consists of a plurality of basic units each of which is a combination of two triangular pyramids having a common bottom surface and apexes disposed in opposite directions, said basic units being arranged continuously in vertical direction of the three-dimensional net-like structure with apexes of each of the basic units being in contact with apexes of adjacent basic units, said plurality of unit structures being disposed in such a manner that adjacent ones of the unit structures come into contact with each other so that the adjacent one of the unit structures are in a position to form a converging section of the three line elements at each apex of the common bottom surface of the two triangular pyramids constituting the basic unit, a converging section of the three line elements formed at a point of contact of the apexes of the adjacent basic units and the converging section formed at a point of contact of adjacent unit structures being respectively formed by binding the three line elements.

In another aspect of the invention, there is provided a three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of four line elements characterized in that a converging section of the unit structure where the four line elements converge is formed by binding the four line elements together.

In still another aspect of the invention, there is provided a three-dimensional net-like structure wherein the three-dimensional net-like structure being formed of a plurality of unit structures each of which consists of a plurality of basic units each of which is a combination of two quadruple pyramids having a common bottom surface and apexes disposed in opposite directions, said basic units being arranged continuously in vertical direction of the three-dimensional net-like structure with apexes of each of the basic units being in contact with apexes of adjacent basic units, said plurality of unit structures being disposed in such a manner that adjacent ones of the unit structures come into contact with each other so that the adjacent one of the unit structures are in a position to form a converging section of the four line elements at each apex of the common bottom surface of the two quadruple pyramids constituting the basic unit, a converging section of the four line elements formed at a point of contact of the apexes of the adjacent basic units and the converging section formed at a point of contact of adjacent unit structures being respectively formed by binding the four line elements.

In the accompanying drawings,
Fig. 1 is schematic perspective view showing an example of a three-dimensional net-like structure;
Fig. 2 is a perspective view showing a unit structure used in this example;
Fig. 3 is a schematic perspective view showing another example of a three-dimensional net-like structure;
Fig. 4 is a perspective view showing a unit structure used in this example;
Fig. 5A is a front view showing a state in which line elements are arranged for forming a unit structure;
Fig. 5B is a plan view of the state shown in Fig. 5A;
Fig. 6A is a front view showing a state in which line elements of a unit structure are bound with wire;
Fig. 6B is a plan view of the state shown in Fig. 6A;
Fig. 7 is a perspective view showing wire used for binding line elements;
Fig. 8 is a perspective view showing a state in which wire is engaged with line elements:
Fig. 9 is a front view showing a step of forming a knot in the wire;
Fig. 10A is a front view showing hooked portions of line element openers are placed about line elements;
Fig. 10B is a view taken along arrows B-B in Fig. 10A;
Fig. 11A is a front view showing line elements in a spread apart state;
Fig. 11B is a view taken along arrows C-C in Fig. 11A;
Fig. 12 is a perspective view showing a converging section bound with a wire;
Fig. 13 is a perspective view showing a flat steel wire used for binding line elements;
Fig. 14 is a perspective view showing a flat steel wire engaged with line elements;
Fig. 15 is a plan view showing the flat steel wire enclosing line elements being caulked with cutting pliers;
Fig. 16 is a plan view showing a step of cutting the flat steel wire with the cutting pliers;
Fig. 17 is a perspective view showing the converging section bound with the flat steel wire;
Fig. 18 is a plan view showing pliers enclosing line elements;
Fig. 19 is a perspective view showing a foremost end portion of the pliers;
Fig. 20 is a perspective view showing a converging section bound with a flat steel wire;
Fig. 21 is a perspective view showing a converging section consisting of four line elements bound with a wire;
Fig. 22 is a perspective view showing a converging section consisting of four line elements bound with a flat steel wire;
Fig. 23 is a perspective view showing a converging section consisting of four line elements which adhere together by means of adhesive; and
Fig. 24 is perspective view showing an example of the prior art X-packing.

Embodiments of the invention will now be described with reference to the accompanying drawings.

This embodiment relates to a method for manufacturing a three-dimensional net-like structure shown in Figs. 1 and 2 in which the unit structure is formed by converging and dispersion of three line elements.

Line elements used in the manufacturing method of the invention may be made of metal or plastic. There is no particular limitation in the material used for line element and wire, twine or monofilament may be used as the line elements. Since the line element is formed to a three-dimensional net-like structure by alternately repeating opening and converging of the three line elements, the material for the line element must be capable of plastic deformation and have sufficient rigidity to maintain their shape after twisting.

The line element may be made of a monofilament or a single piece of wire but a line element made of wire or twine which is made by twisting thin steel lines or plastic lines is preferable because liquid flows along the space between the lines which constitute the wire or twine due to the capillary action and thereby enhance transfer of the liquid. In the present embodiment, seven steel lines each having a diameter of 0.1mm are twisted together to form a single steel wire and two of this steel wire are further twisted to a single wire and this wire is used as the line element 3.

### (1) Step of producing a unit structure

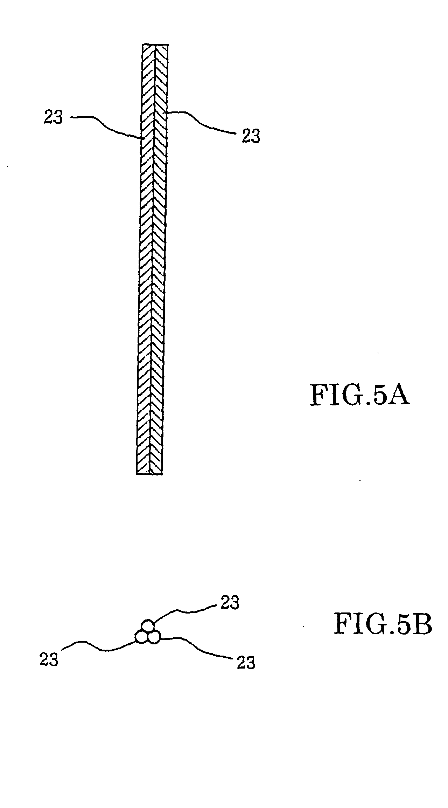

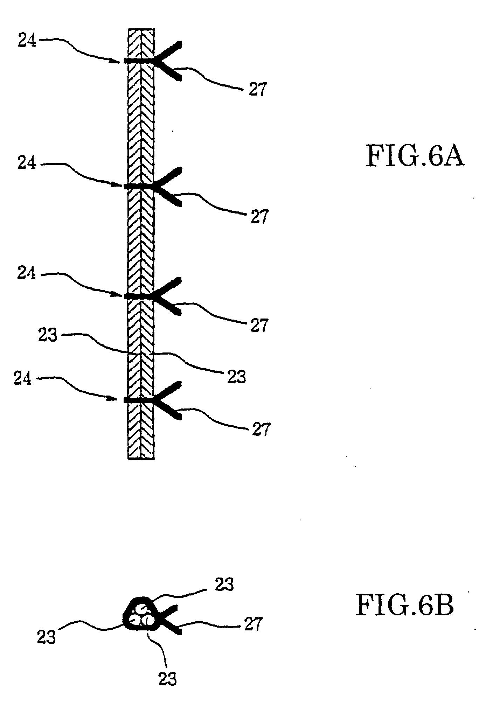

For producing the unit structure 25 of the three-dimensional net-like structure shown in Figs. 1 and 2, three line elements 23 are first disposed in parallel to one another and in contact with one another as shown in the front view of Fig. 5A and the plan view of Fig. 5B. Then, for forming converging sections 24 of the unit structure 25, the three line elements 23 are bound together at a predetermined interval with wires 27 as shown in the front view of Fig. 6A and the plan view of Fig. 6B.

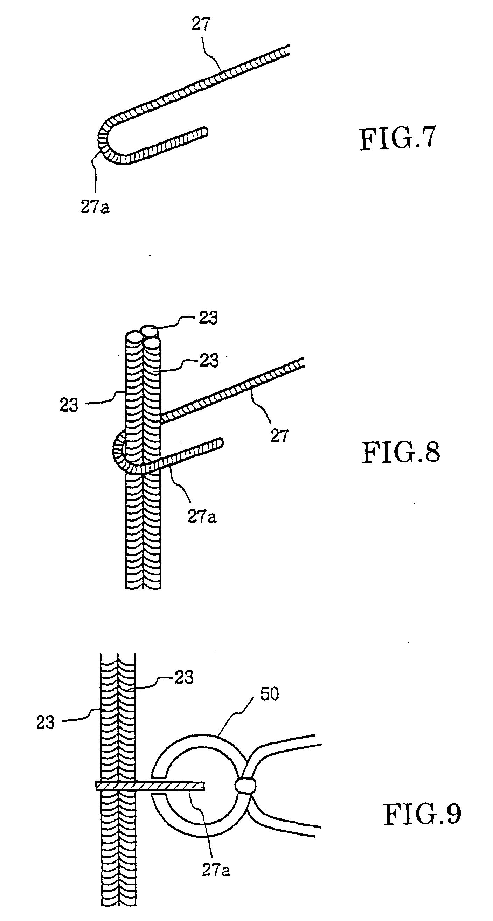

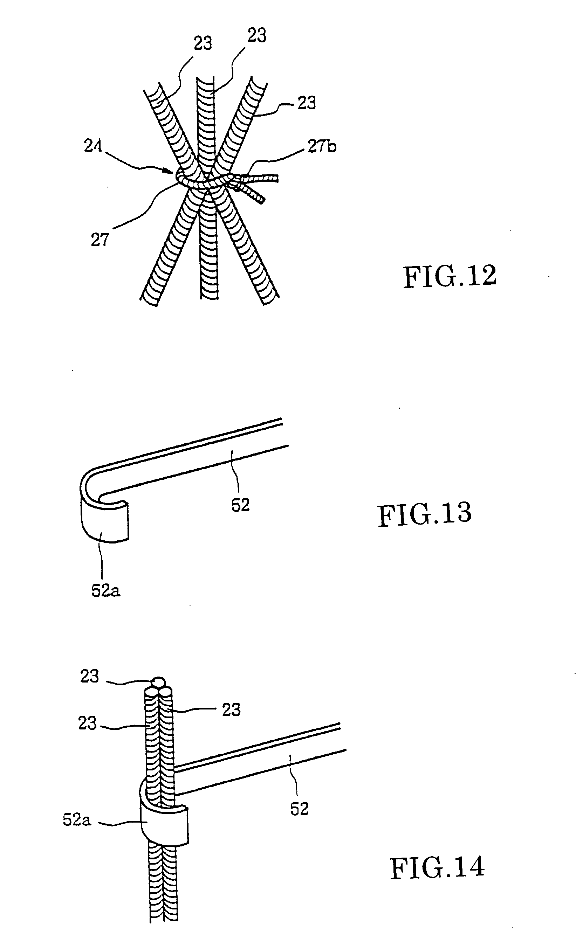

For binding the three line elements 23 with the wires 27, as shown in Fig. 7, a wire 27 made of steel wire is bent in U-shape in its foremost end portion 27a by means of a known wire tip bending machine (not shown). Then, as shown in Fig. 8, this wire 27 is disposed in such a manner that its bent foremost end portion 27a enclose the three line elements 23 and are engaged with these line elements 23 and then, as shown in Fig. 9, the foremost end portion 27a of the wire 27 and a portion of the wire 27 adjacent to the foremost end portion 27a are held by cutting pliers 50. By turning the cutting pliers 50 by predetermined times (e.g., three times), a knot (shown by reference numeral 27b in Fig. 12) is formed in the wire 27. Then, the cutting pliers 50 are withdrawn by a predetermined distance and the wire 27 and its foremost end portion 27a are cut off with the cutting pliers 50.

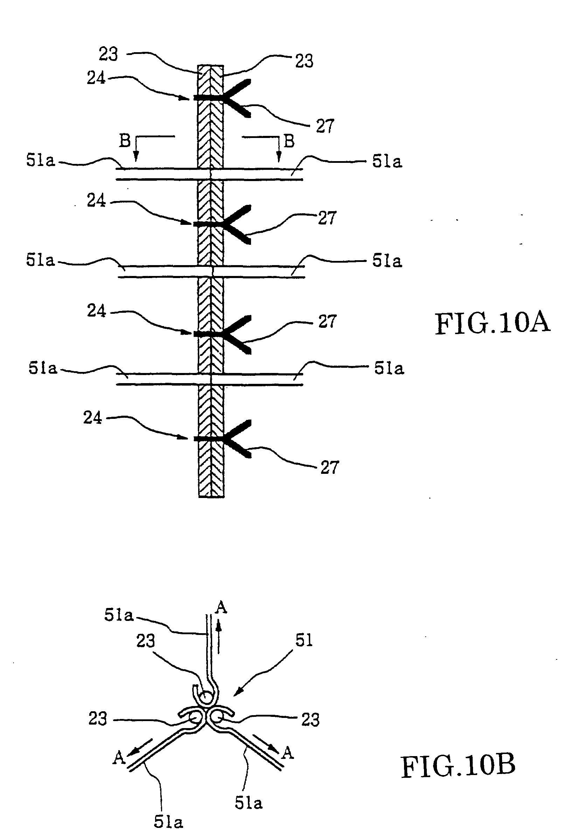

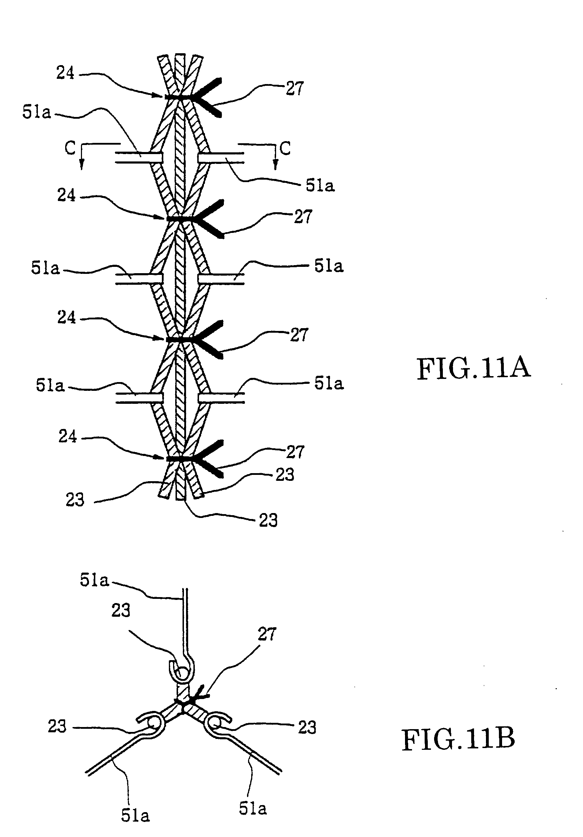

Then, the three line elements 23 which have been bound at converging sections 24 formed at the predetermined interval in the longitudinal direction are spread apart at each middle position between the adjacent converging sections 24 in a manner shown in Figs. 10A, 10B, 11A and 11B. First, as shown in Figs. 10A and 10B, an opening spreader 51 having three hooks 51a which are disposed at an interval of 180 degrees is disposed in such a manner that the respective hooks 51a are engaged with respective three line elements 23 at middle positions between the respective converging sections 24. Then, by pulling the hooks 51a in the direction of arrow A in Fig. 10B, the three line elements 23 are spread apart at the middle positions of the converging sections 24 as shown in Figs. 11A and 11B. Thus, when the hooks 51a have been withdrawn, the unit structure 25 which consists of a plurality of basic units 22 each of which is a combination of two triangular pyramids having a common bottom surface 22d and apexes 22a disposed in opposite directions, the basic units 22 being arranged continuously in vertical direction, is formed. The converging section 24 of this unit structure 25 is shown in the perspective view of Fig. 12.

### (2) Step of binding a plurality of the unit structures

A plurality of the unit structures 25 are disposed in such a manner that, as shown in Fig. 1, horizontally adjacent ones of the unit structures 25 come into contact with each other so that the adjacent one of the unit structures 25 are in a position to form the converging section 26 of the three line elements 23 at each apex 22c of the common bottom surface 22d of the two triangular pyramids constituting the basic unit 22. By binding the converging section 26 of the three line elements 23 at each point of contact of the adjacent ones of the unit structure 25 in a manner shown in Figs. 7 to 9, i.e., by binding with wire 27, the packing 27 made of a three-dimensional net-like structure is formed.

In the above described steps (1) and (2), forming of plural unit structures 25 and binding of these unit structures 25 can be achieved all at once by arranging and operating a plurality of cutting pliers 50 and opening spreader 51.

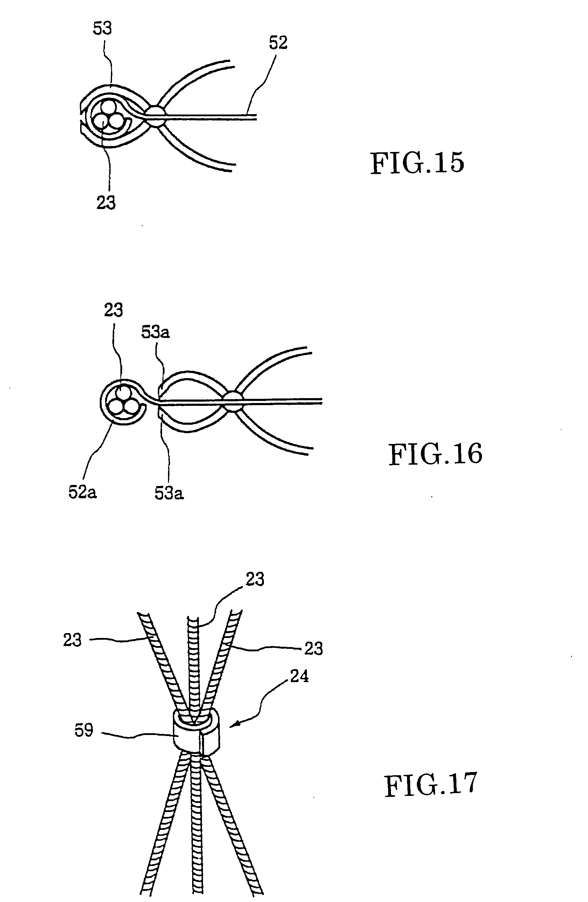

Another example of binding three line elements 23 together is shown in Figs. 13 to 17. In this example, as shown in Fig. 13, flat steel wire 52 in the form of a flat sheet is bent in U-shape in its foremost end portion 52a. This flat steel wire 52 is disposed, as shown in Fig. 14, in such a manner that its bent foremost end portion 52a substantially encloses the three line elements 23 and is engaged with the line elements 23. Then, as shown in Fig. 15, the foremost end portion 52a of the flat steel wire 52 is caulked against the three line elements 23 with cutting pliers 53 and then, as shown in Fig. 16, by cutting the flat steel wire 52 with a cutting tipe of the pliers 53, a clip ring 59 as shown in Fig. 17 is formed and the three line elements 23 are thereby bound together. The converging section 24 of the unit structure formed in this manner is shown in the perspective view of Fig. 17.

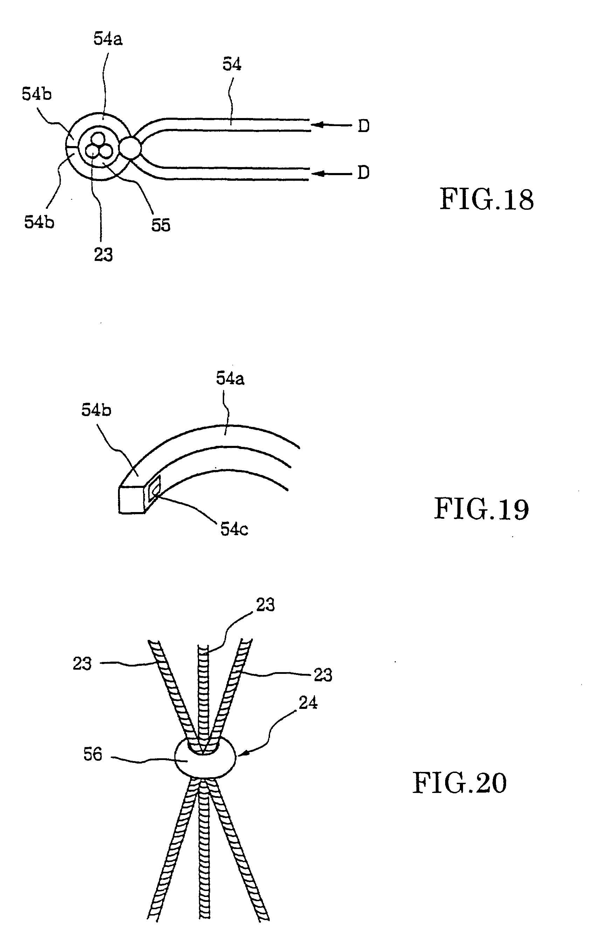

Another example of binding the three line elements 23 is shown in Figs. 18 to 20. In this example, as shown in Fig. 18, pliers 54 are disposed in such a manner that an annular portion 54a encloses the three line elements 23 with a predetermined gap 55 defined between the annular portion 54a and the three line elements 23. The pliers 54 are made of hollow pipes and, as shown in Fig. 19, a foremost end portion 54b of the annular portion 54a is formed in its inner side portion with an opening 54c. The pliers 54 are connected to an adhesive supply tank (not shown) storing adhesive such as a quick setting adhesive through a connecting hose (not shown). By supplying liquid quick setting adhesive under pressure into the pliers 54 in Fig. 19, the liquid quick setting adhesive flows into the gap 55 between the line elements 23 and the annular portion 54a and the three line elements 23 adhere to one another to form an adhered section 56 (Fig. 20) whereby binding of the three line elements 23 is achieved. After completion of adhesion, the pliers 54 are withdrawn. The converging section 24 of the unit structure made in this manner is shown in the perspective view of Fig. 20.

This embodiment relates to a method for manufacturing a three-dimensional net-like structure 40 shown in Figs. 3 and 4 in which the unit structure is formed by converging and dispersion of four line elements.

In this embodiment also, the line element which can be used in the Embodiment 1 can be used. In forming of the unit structure 45 and binding of the unit structures 45 together, the same steps as described with respect to the Embodiment 1 can be used except that four line elements 23 instead of three line elements 23 are used and the opening spreader 51 shown in Figs. 10 and 11 has four hooks 51a instead of three. Detailed description about these steps will therefore be omitted. For binding converging sections 44 and 46 of the four line elements 23, the same methods employed in the Embodiment 1 can be employed.

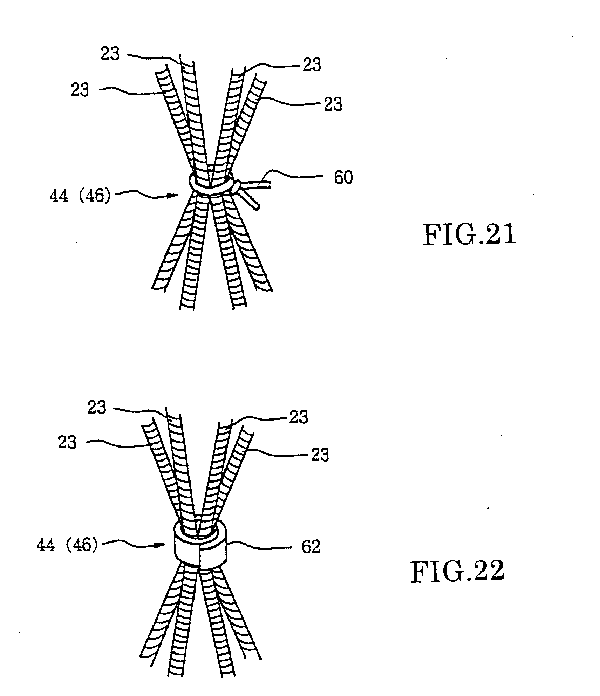

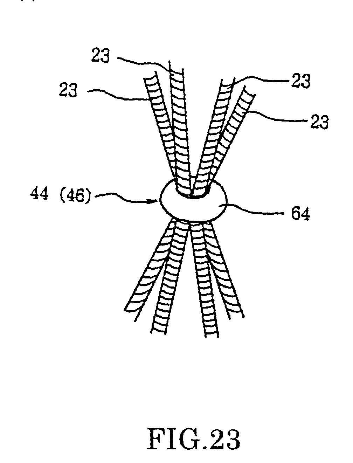

Fig. 21 is a perspective view showing an example of a converging section 44 (46) formed by binding four line elements 23 with wire 60 in the same manner as illustrated in Figs. 7 to 9. Fig. 22 is a perspective view showing an example of a converging section 44 (46) formed by binding the four line elements 23 with a clip ring 62 in the same manner as illustrated in Figs. 13 to 16. Fig. 23 is a perspective view showing an example of a converging section 44 (46) formed by forming an adhered section 64 with quick setting adhesive in the same manner as illustrated in Figs. 18 and 19.

In the same manner as in Embodiment 1, forming of plural unit structures 45 and binding of these unit structures 45 can be achieved all at once by arranging and operating a plurality of cutting pliers 50 and opening spreader 51.

## Claims

1. A method for manufacturing a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of three line elements, said method comprising a step of forming a converging section of the unit structure where the three line elements converge by binding the three line elements together.

2. A method for manufacturing a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of three line elements, said method comprising steps of
(A) forming a unit structure with three line elements, said unit structure consisting of a plurality of basic units each of which is a combination of two triangular pyramids having a common bottom surface and apexes disposed in opposite directions, said basic units being arranged continuously in vertical direction of the three-dimensional net-like structure with apexes of each of the basic units being in contact with apexes of adjacent basic units, and a converging section of the three line elements being formed by binding the three line elements at a point of contact of the apexes of the adjacent basic units, and
(B) disposing a plurality of said unit structures in such a manner that adjacent ones of the unit structures come into contact with each other so that the adjacent one of the unit structures are in a position to form the converging section of the three line elements at each apex of the common bottom surface of the two triangular pyramids constituting the basic unit, and forming the converging section of the three line elements by binding the three line elements at each point of contact of the adjacent ones of the unit structures.

3. A method for manufacturing a packing made of a three-dimensional net-like structure as defined in claim 2 wherein the converging section of the three line elements is formed by binding the three line elements by means of wire.

4. A method for manufacturing a packing made of a three-dimensional net-like structure as defined in claim 2 wherein the converging section of the three line elements is formed by binding the three line elements by means of a clip.

5. A method for manufacturing a packing made of a three-dimensional net-like structure as defined in claim 2 wherein the converging section of the three line elements is formed by adhering together of the three line elements by means of an adhesive.

6. A method for manufacturing a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of four line elements, said method comprising a step of forming a converging section of the unit structure where the four line elements converge by binding the four line elements together.

7. A method for manufacturing a packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of four line elements, said method comprising steps of:
(A) forming a unit structure with four line elements, said unit structure consisting of a plurality of basic units each of which is a combination of two quadruple pyramids having a common bottom surface and apexes disposed in opposite directions, said basic units being arranged continuously in vertical direction of the three-dimensional net-like structure with apexes of each of the basic units being in contact with apexes of adjacent basic units, and a converging section of the four line elements being formed by binding the four line elements at a point of contact of the apexes of the adjacent basic units, and
(B) disposing a plurality of said unit structures in such a manner that adjacent ones of the unit structures come into contact with each other so that the adjacent one of the unit structures are in a position to form the converging section of the four line elements at each apex of the common bottom surface of the two quadruple pyramids constituting the basic unit, and forming the converging section of the four line elements by binding the four line elements at each point of contact of the adjacent ones of the unit structures.

8. A method for manufacturing a packing made of a three dimensional net-like structure as defined in claim 7 wherein the converging section of the four line elements is formed by binding the four line elements by means of wire.

9. A method for manufacturing a packing made of a three-dimensional net-like structure as defined in claim 7 wherein the converging section of the four line elements is formed by binding the four line elements by means of a clip.

10. A method for manufacturing a packing made of a three-dimensional net-like structure as defined in claim 7 wherein the converging section of the four line elements is formed by adhering together of the four line elements by means of an adhesive.

11. A method for manufacturing a three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of three line elements, said method comprising a step of forming a converging section of the unit structure where the three line elements converge by binding the three line elements together.

12. A method for manufacturing a three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of three line elements, said method comprising steps of:
(A) forming a unit structure with three line elements, said unit structure consisting of a plurality of basic units each of which is a combination of two triangular pyramids having a common bottom surface and apexes disposed in opposite directions, said basic units being arranged continuously in vertical direction of the three-dimensional net-like structure with apexes of each of the basic units being in contact with apexes of adjacent basic units, and a converging section of the three line elements being formed by binding the three line elements at a point of contact of the apexes of the adjacent basic units, and
(B) disposing a plurality of said unit structures in such a manner that adjacent ones of the unit structures come into contact with each other so that the adjacent one of the unit structures are in a position to form the converging section of the three line elements at each apex of the common bottom surface of the two triangular pyramids constituting the basic unit, and forming the converging section of the three line elements by binding the three line elements at each point of contact of the adjacent ones of the unit structures.

13. A method for manufacturing a three-dimensional net-like structure as defined in claim 12 wherein the converging section of the three line elements is formed by binding the three line elements by means of wire.

14. A method for manufacturing a three-dimensional net-like structure as defined in claim 12 wherein the converging section of the three line elements is formed by binding the four line elements by means of a clip.

15. A method for manufacturing a three-dimensional net-like structure as defined in claim 12 wherein the converging section of the three line elements is formed by adhering together of the three line elements by means of an adhesive.

16. A method for manufacturing a three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of four line elements, said method comprising a step of forming a converging section of the unit structure where the four line elements converge by binding the four line elements together.

17. A method for manufacturing a three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of four line elements, said method comprising steps of:
(A) forming a unit structure with four line elements, said unit structure consisting of a plurality of basic units each of which is a combination of two quadruple pyramids having a common bottom surface and apexes disposed in opposite directions, said basic units being arranged continuously in vertical direction of the three-dimensional net-like structure with apexes of each of the basic units being in contact with apexes of adjacent basic units, and a converging section of the four line elements being formed by binding the four line elements at a point of contact of the apexes of the adjacent basic units, and
(B) disposing a plurality of said unit structures in such a manner that adjacent ones of the unit structures come into contact with each other so that the adjacent one of the unit structures are in a position to form the converging section of the four line elements at each apex of the common bottom surface of the two quadruple pyramids constituting the basic unit, and forming the converging section of the four line elements by binding the four line elements at each point of contact of the adjacent ones of the unit structures.

18. A method for manufacturing a three-dimensional net-like structure as defined in claim 17 wherein the converging section of the four line elements is formed by binding the four line elements by means of wire.

19. A method for manufacturing a three-dimensional net-like structure as defined in claim 17 wherein the converging section of the four line elements is formed by binding the four line elements by means of a clip.

20. A method for manufacturing a three-dimensional net-like structure as defined in claim 17 wherein the converging section of the four line elements is formed by adhering together of the four line elements by means of an adhesive.

21. A packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of three line elements **characterized in that** a converging section of the unit structure where the three line elements converge is formed by binding the three line elements together.

22. A packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of three line elements, said three-dimensional net-like structure being formed of a plurality of unit structures each of which consists of a plurality of basic units each of which is a combination of two triangular pyramids having a common bottom surface and apexes disposed in opposite directions, said basic units being arranged continuously in vertical direction of the three-dimensional net-like structure with apexes of each of the basic units being in contact with apexes of adjacent basic units, said plurality of unit structures being disposed in such a manner that adjacent ones of the unit structures come into contact with each other so that the adjacent one of the unit structures are in a position to form a converging section of the three line elements at each apex of the common bottom surface of the two triangular pyramids constituting the basic unit, a converging section of the three line elements formed at a point of contact of the apexes of the adjacent basic units and the converging section formed at a point of contact of adjacent unit structures being respectively formed by binding the three line elements.

23. A packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of four line elements **characterized in that** a converging section of the unit structure where the four line elements converge is formed by binding the four line elements together.

24. A packing made of a three-dimensional net-like structure which constitutes an internal structure of a device which performs material transfer, heat exchange or mixing between gases, liquids or gas and liquid, said internal structure being divided in a plurality of chambers or channels connected to one another and said three-dimensional net-like structure being made of a plurality of unit structures which are arranged continuously in vertical and horizontal directions of the three-dimensional net-like structure, each of the unit structures being formed by converging and dispersion of four line elements, said three-dimensional net-like structure being formed of a plurality of unit structures each of which consists of a plurality of basic units each of which is a combination of two quadruple pyramids having a common bottom surface and apexes disposed in opposite directions, said basic units being arranged continuously in vertical direction of the three-dimensional net-like structure with apexes of each of the basic units being in contact with apexes of adjacent basic units, said plurality of unit structures being disposed in such a manner that adjacent ones of the unit structures come into contact with each other so that the adjacent one of the unit structures are in a position to form a converging section of the four line elements at each apex of the common bottom surface of the two quadruple pyramids constituting the basic unit, a converging section of the four line elements formed at a point of contact of the apexes of the adjacent basic units and the converging section formed at a point of contact of adjacent unit structures being respectively formed by binding the four line elements.

25. A three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of three line elements **characterized in that** a converging section of the unit structure where the three line elements converge is formed by binding the three line elements together.

26. A three-dimensional net-like structure as defined in claim 25 wherein said three-dimensional net-like structure is formed of a plurality of unit structures each of which consists of a plurality of basic units each of which is a combination of two triangular pyramids having a common bottom surface and apexes disposed in opposite directions, said basic units being arranged continuously in vertical direction of the three-dimensional net-like structure with apexes of each of the basic units being in contact with apexes of adjacent basic units, said plurality of unit structures being disposed in such a manner that adjacent ones of the unit structures come into contact with each other so that the adjacent one of the unit structures are in a position to form a converging section of the three line elements at each apex of the common bottom surface of the two triangular pyramids constituting the basic unit, a converging section of the three line elements formed at a point of contact of the apexes of the adjacent basic units and the converging section formed at a point of contact of adjacent unit structures being respectively formed by binding the three line elements.

27. A three-dimensional net-like structure including a mist eliminator and a multi-layer filtering film made of a plurality of unit structures which are arranged continuously in vertical and horizontal directions of the three-dimensional net-like structure, each of the unit structures being formed by converging and dispersion of four line elements **characterized in that** a converging section of the unit structure where the four line elements converge is formed by binding the four line elements together.

28. A three-dimensional net-like structure as defined in claim 27 wherein said three-dimensional net-like structure being formed of a plurality of unit structures each of which consists of a plurality of basic units each of which is a combination of two quadruple pyramids having a common bottom surface and apexes disposed in opposite directions, said basic units being arranged continuously in vertical direction of the three-dimensional net-like structure with apexes of each of the basic units being in contact with apexes of adjacent basic units, said plurality of unit structures being disposed in such a manner that adjacent ones of the unit structures come into contact with each other so that the adjacent one of the unit structures are in a position to form a converging section of the four line elements at each apex of the common bottom surface of the two quadruple pyramids constituting the basic unit, a converging section of the four line elements formed at a point of contact of the apexes of the adjacent basic units and the converging section formed at a point of contact of adjacent unit structures being respectively formed by binding the four line elements.
